# EUROPEAN PATENT SPECIFICATION

(11) **EP 3 636 937 B1**
(45) Date of publication and mention of the grant of the patent: **07.12.2022**
(21) Application number: 19202604.5
(22) Date of filing: 10.10.2019
(51) Int. Cl.: F16B 2/14, F16B 5/06

(54) **CLAMPING DEVICE FOR APPLICATION ON A CLOTH, FOIL OR PLATE**
KLEMMVORRICHTUNG ZUM AUFBRINGEN AUF EIN TUCH, EINE FOLIE ODER EINE PLATTE
DISPOSITIF DE SERRAGE POUR APPLICATION SUR UN TISSU, UNE FEUILLE OU UNE PLAQUE

(30) Priority: 10.10.2018 NL 2021793
(43) Date of publication of application: 15.04.2020
(73) Proprietor: Iac B.V., 3771 HW Barneveld (NL); Eureka P.D. & E., 2440 Geel (BE)
(72) Inventor: Lieshout, van, Steven, 2440 Geel (BE)
(74) Representative: Verhees, Godefridus Josephus Maria

(56) References cited:
- WO-A1-00/11352
- WO-A1-2017/044078
- DE-C1- 19 513 436
- FR-A- 506 624
- GB-A- 2 024 925

## Description

### Technical field of the invention

The invention relates to a clamping device which can be applied to an object, for example a cloth, foil or plate, by clamping two opposite sides of the object, comprising:
- a first clamping part provided with a first clamping surface and a guide surface present opposite and ascending relative to the first clamping surface, and
- a second clamping part provided with a second clamping surface that faces the first clamping surface, as well as a sliding part which can slide over the ascending guide surface and thereby changes the distance between the clamping surfaces,
- wherein the first clamping part on the side of the ascending guide surface is provided with a first protrusion,
- wherein the sliding part is provided with a second protrusion which is on the same side of the first clamping part as the first protrusion,
- wherein the protrusions can be moved manually towards each other and away from each other in order to move the clamping surfaces towards each other or away from each other,
- wherein the first clamping part is provided with a slot which is present in the ascending guide surface and extends in the ascending direction,
- wherein the sliding part is connected via a connecting part to the rest of the second clamping part, and
- wherein the connecting part protrudes through the slot and the sliding part being located on both sides of the slot.

Such a clamping device can be used inter alia for suspending a curtain that is not provided with suspension eyes or hooks. The clamping device can be clamped directly onto the curtain fabric and coupled to a suspension element for hanging it on a rail or tube.

### Background of the invention

From WO0011352A1 a clamping device is known consisting of a fixed part with a clamping surface provided with pyramid-shaped pins which grips into the cloth during use and a separate part with a smooth clamping surface which is slidable relative to the fixed part and slides over the cloth during the application of the clamping device. The clamping device must initially be pressed onto the cloth by hand. This compressive force must be sufficient for the fixed part with pins to be secured in the cloth. With further loading of the loose part, due to the weight of the curtain or other load, the loose part slides further and the wedge transmission between both parts ensures such a normal force on the cloth that the cloth clamps more firmly. The greater the load, the greater the clamping force. If the initial clamping is too light, the cloth will come loose when loaded, especially with thin, smooth cloths.

There is no support in the known clamping device for moving the clamping parts towards each other, certainly not if the clamping parts are hung on a fixed fastening (such as elastic tension bands arranged around a tube), then the clamping parts can hardly be pressed towards each other. Also for loosening, there is no hold and one has to use an accessory (coin or something) in case of strong clamping to wring the clamping parts apart. To be able to clamp a thin cloth the required distance to the suspension point is relatively large.

A clamping device according to the preamble of claim 1 is known from FR 506624 A.

### Summary of the invention

It is an object of the invention to provide a clamping device of the type described in the preamble in which the two clamping parts can more easily be pressed firmly onto an object. To this end, the clamping device according to the invention is characterized in that:
- the first clamping part is provided with a further slot which is also present in the ascending guide surface and is parallel to said slot, and
- the second clamping part is provided with a further sliding part which is connected via a further connecting part protruding through the further slot to the rest of the second clamping part,
- wherein the further connecting part protrudes through the further slot and also the further sliding part is located on both sides of the further slot and is provided with a third protrusion.

These protrusions can be simply and firmly pressed towards each other by means of the thumb and forefinger, whereby the clamping surfaces are moved towards each other and a firm clamping is created. The two slots and two sliding parts ensures a good force distribution.

The clamping device is preferably provided with a coupling part for coupling to a suspension element, which coupling part is present between the two slots. The coupling part can be formed by a hole so that a cord can be looped or knotted to the clamping device. The coupling part can also be formed by a housing for receiving a rotating part with which the clamping device can be suspended from, for example, a rail or tube. The advantage of the rotating coupling is that it is also possible to hang pleated (rotated 90° in relation to straight curtains) curtains. By placing the coupling part between the slots, the distance from the cloth to the suspension point does not increase.

Furthermore, when hanging curtains, for example, it is required that the distance from the curtain to the suspension point is as small as possible. However, if one wants to be able to suspend a large variation of cloth thicknesses, the distance to the suspension point becomes greater depending on the wedge angle used. The smaller the wedge angle, the greater this distance. However, the larger the wedge angle, the smaller the clamping force for the same load.

An embodiment of the clamping device according to the invention with which both thin and thick cloths can be properly hung and wherein the distance to the suspension point is limited, is characterized in that the ascending guide surface comprises a first part with an angle of inclination greater than that of a second part of the ascending guide surface, which second part is adjacent to the first part. In the clamping device according to the invention, the wedge (present between the ascending surface and the clamping surface) is larger in the position in which the clamping surfaces are far apart than in the position in which the clamping surfaces are closer to each other. As a result, when clamping on thin cloths, there is a small distance to the suspension point and the clamping is nevertheless possible for all cloth types and double cloths. It has been found that for the thin cloths a wedge angle (inclination angle of the ascending guide surface) of 6° to 10° is favorable (ideally 8°) and for cloths thicker than 3 mm a wedge angle of 10° -15° is favorable.

Preferably, the first part of the ascending guide surface is curved and has a decreasing angle of inclination towards the second part and the second part of the ascending guide surface is straight. As a result, the wedge angle and the force to be applied for clamping change evenly during clamping.

### Brief description of the drawings

The invention will be explained in more detail below with reference to an exemplary embodiment of the clamping device according to the invention shown in the drawings. Hereby shows:
Figure 1 the clamping device used in a hanging system for a curtain;
Figure 2 the suspension system shown in Figure 1 in separate parts;
Figure 3 the clamping device of the suspension system shown in Figures 1 and 2 in front view with the clamping parts in a neutral position relative to each other;
Figure 4 the clamping device shown in Figure 3 in side view;
Figure 5 the clamping device shown in Figure 3 in bottom view;
Figure 6 the clamping device shown in Figure 3 in top view;
Figure 7 the clamping device in section along line VII-VII in Figure 3;
Figure 8 the clamping device in front view with the clamping parts in the open position;
Figure 9 the clamping device shown in Figure 8 in side view;
Figure 10 the clamping device in front view with the clamping parts in the closed position;
Figure 11 the clamping device shown in Figure 10 in side view;
Figure 12 the clamping device in section along line XII-XII in Figure 3;
Figure 13 the clamping device in section along line XIII-XIII in Figure 8.
Figure 14 the clamping device in section along line XIV-XIV in Figure 10.

### Detailed description of the drawings

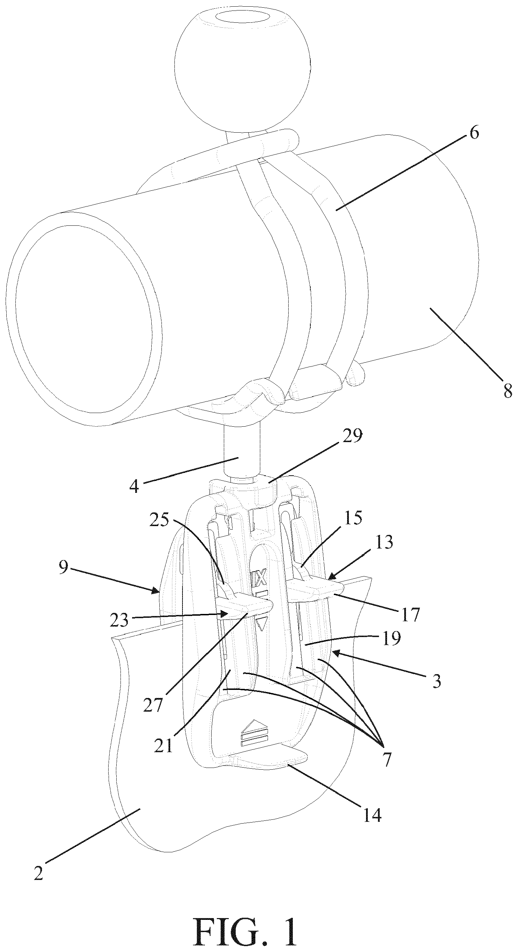

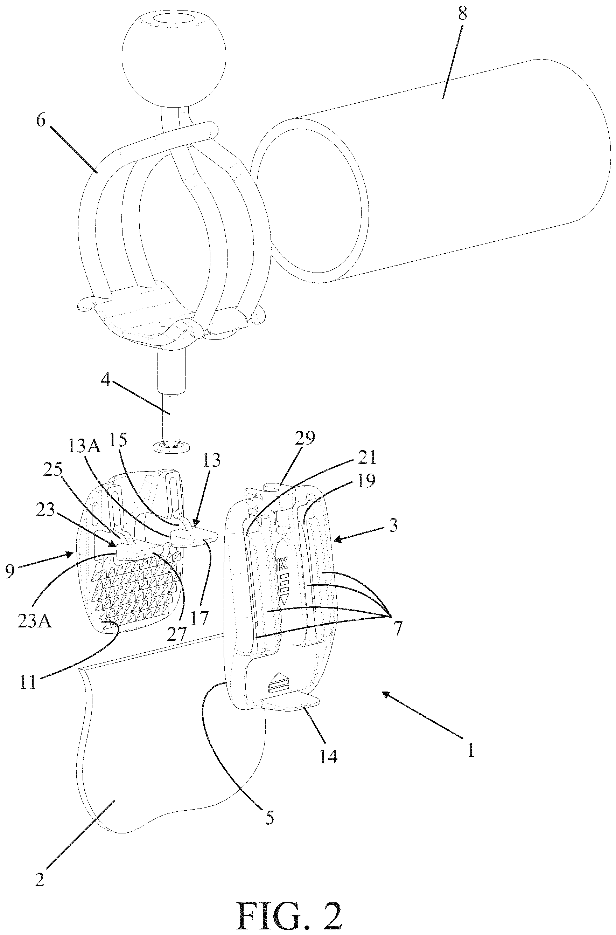

Figure 1 shows an embodiment of the clamping device 1 according to the invention as part of a suspension system for a curtain 2. Figure 2 shows the suspension system in separate parts for clarification. The suspension system has a suspension element 4 which is attached to a tube 8 by means of an elastic cord 6. The clamping device 1 also forms part of the suspension system and is provided with a coupling part 29 which is coupled to the suspension element 4. The coupling part 29 has a U-shaped recess and is slid over the suspension element, a disc at the end of the suspension element 4 being present under the edge of the U-shaped recess.

The clamping device 1 has two clamping parts 3 and 9 which clamp against two opposite sides of the curtain 2. A first of the clamping parts 3 is provided with a first clamping surface 5 (see Figure 2) which is smooth, and with a guide surface 7 present opposite and ascending with respect to the first clamping surface. The first clamping part 3 is furthermore provided with two slots 19 and 21 being parallel to each other and extending into the rising guide surface 7. The first clamping part is furthermore provided with a protrusion 14 which is situated on the side provided with the ascending guide surface 7.

The other second clamping part 9 is provided with a second clamping surface 11 (see figure 2) which faces the first clamping surface 5 and which is provided with teeth which protrude into the curtain 2. The second clamping part 9 is furthermore provided with two sliding parts 13 and 23 which are present against the ascending guide surface 7 and can slide over this surface, whereby the distance between the clamping surfaces changes. The sliding parts 13 and 23 are connected to the rest of the second clamping part 9 via connecting parts 15 and 25 protruding through the slots 19 and 21 and are provided with further projections 17 and 27. The sliding parts 13 and 23 are each provided with a sliding surface 13A and 23A, respectively, which is in contact with the ascending surface 7.

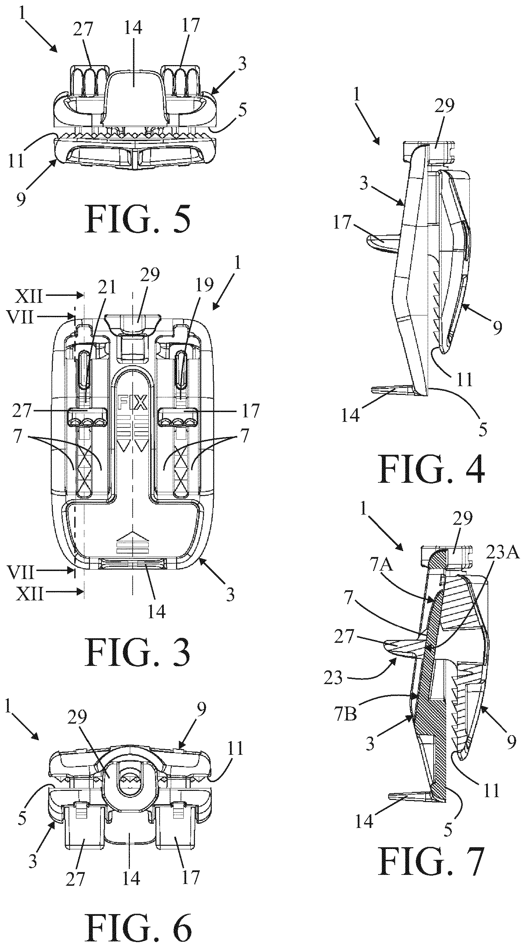

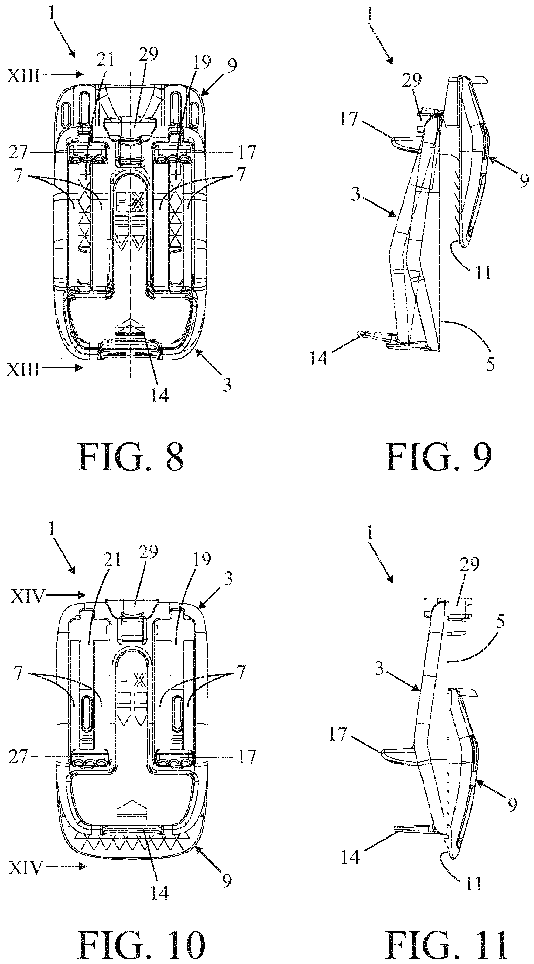

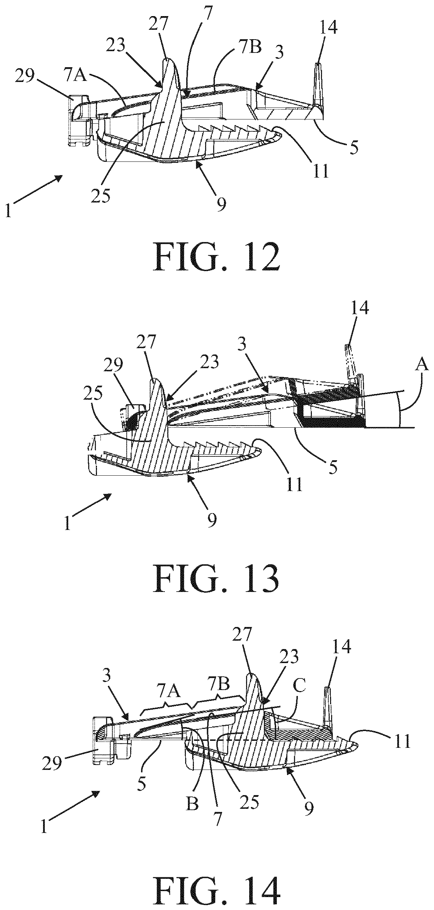

In Figures 3-7 the clamping device of the suspension system shown in Figures 1 and 2 is shown in various views with the clamping parts in a neutral position relative to each other. A neutral position is here understood to mean a position between the two extreme positions relative to each other shown in figures 8-11. The ascending guide surface 7 of the first clamping part 3 is divided into four guide tracks present in one plane and extending on either side of the slots 19 and 21. These guide tracks run, with respect to the clamping surface 5, from the end near the coupling part 29 (this can be clearly seen in Figures 12-14) up to the end near the protrusion 14. The guide tracks (the ascending guide surface) each have a first ascending part 7A with a steeper angle of inclination with respect to the clamping surface 5 than a second ascending part 7B, see figure 7 in which the clamping device 1 is shown in section along line VII-VII in figure 3. Each sliding part 13 is with its sliding surface 13A in contact with the ascending surface 7.

In the figures 8 and 9 the clamping parts 3 and 9 are shown in open position relative to each other. In this position, the clamping surfaces 5 and 11 are the furthest away from each other and the clamping parts can tilt with respect to each other over an angle A to make it easier to fit the clamping device onto a curtain. In the figures 10 and 11 the clamping parts 3 and 9 are shown in closed position relative to each other. In this position, the clamping surfaces 5 and 11 are in contact with each other because the sliding parts 13 and 23 have been slid upwardly over the guide surface 7, whereby the part of the clamping part 9 that is provided with the clamping surface 11 has been moved to the clamping part 3.

In figures 12-14 the clamping device is shown in section in different positions of the clamping parts relative to each other. In figure 12 the clamping device is shown in section along line XII-XII in figure 3 with the clamping parts in neutral position. Figure 13 shows the clamping device in section along line XIII-XIII in Figure 8 with the clamping parts in the open position. Figure 14 shows the clamping device in section along line XIV-XIV in Figure 10 with the clamping parts in the closed position. The ascending guide surface 7 has a first part 7A with an angle of inclination B which in the longitudinal direction extends gradually from 15 degrees to 8 degrees and a second part 7B connected to the first part with an inclination angle C of 8 degrees that is constant along the length.

The construction of the clamping device 1 is designed such that the two clamping parts 3 and 9 can be initially clicked into each other so that they form a composition. In the clicked-together position, see Fig. 12, the clamping parts can be spread apart over an angle A so that the device can easily be put over the curtain 2. During initial clamping by squeezing the protrusion 14 on the one hand and the protrusions 17 and 27 on the other hand towards each other, the wedge transmission forms a relatively large wedge angle B of 15° between the guide surface 7 and the clamping surfaces 5 and 11, see Figure 14. With a relatively small shift a relatively thick curtain can be clamped. As the projections 14 and 17 and 27 are further squeezed together, the wedge angle gradually changes to a final wedge angle C of 8°, which is ideal for clamping thinner curtains (thinner than 2 mm). As a result, the clamping range is large in relation to the displacement and to the required distance between the cloth and the suspension element 4. In the clamping device according to the invention, initial clamping by means of a thumb index pinch movement is very simple, more force can be applied and there is a relative small distance to the suspension point. For loosening the clamping device, no accessory is required even with very firm clamping and this can also be done with a thumb index pinch movement.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Clamping device (1) which can be applied to an object (2), for example a cloth, foil or plate, by clamping two opposite sides of the object, comprising:
- a first clamping part (3) provided with a first clamping surface (5) and a guide surface (7) present opposite and ascending relative to the first clamping surface, and
- a second clamping part (9) provided with a second clamping surface (11) that faces the first clamping surface, as well as a sliding part (13) which can slide over the ascending guide surface (7) and thereby changes the distance between the clamping surfaces,
- wherein the first clamping part (3) on the side of the ascending guide surface (7) is provided with a first protrusion (14),
- wherein the sliding part (13) is provided with a second protrusion (17) which is on the same side of the first clamping part as the first protrusion,
- wherein the protrusions can be moved manually towards each other and away from each other in order to move the clamping surfaces (5, 11) towards each other or away from each other,
- wherein the first clamping part (3) is provided with a slot (19) which is present in the ascending guide surface (7) and extends in the ascending direction,
- wherein the sliding part (13) is connected via a connecting part (15) to the rest of the second clamping part (9), and
- wherein the connecting part protrudes through the slot and the sliding part being located on both sides of the slot (19).
**characterized in that**:
- the first clamping part (3) is provided with a further slot (21) which is also present in the ascending guide surface (7) and is parallel to said slot (19), and
- the second clamping part (9) is provided with a further sliding part (23) which is connected via a further connecting part (25) protruding through the further slot (21) to the rest of the second clamping part,
- wherein the further connecting part protrudes through the further slot (21) and also the further sliding part (23) is located on both sides of the further slot (21) and is provided with a third protrusion (27).

2. Clamping device according to claim 1, **characterized in that** the clamping device is provided with a coupling part (29) for coupling to a suspension element (4), which coupling part is present between the two slots (19, 21).

3. Clamping device according to claim 1 or 2, **characterized in that** the ascending guide surface (7) comprises a first part (7A) with an angle of inclination greater than that of a second part (7B) of the ascending guide surface (7B), which second part is adjacent to the first part (7).

4. Clamping device according to claim 3, **characterized in that** the first part (7A) of the ascending guide surface (7) is curved and has a decreasing angle of inclination towards the second part (7B) and the second part (7B) of the ascending guide surface (7) is straight.

5. Clamping device according to claim 4, **characterized in that** the angle of inclination of the first part (7A) decreases from between 10 to 15 degrees to between 6 to 10 degrees and that the angle of inclination of the second part (7B) is between 6 to 10 degrees.

## Patentansprüche

1. Spannvorrichtung (1), die an einem Gegenstand (2), beispielsweise einem Tuch, einer Folie oder einer Platte, anbringbar ist, indem zwei gegenüberliegende Seiten des Gegenstands geklemmt werden, umfassend:
- ein erstes Klemmteil (3), das mit einer ersten Klemmfläche (5) und einer gegenüber der ersten Klemmfläche ansteigenden Führungsfläche (7) versehen ist, und
- ein zweites Klemmteil (9), das mit einer der ersten Klemmfläche zugewandten zweiten Klemmfläche (11) sowie einem Gleitteil (13) versehen ist, das über die ansteigende Führungsfläche (7) gleiten kann und dadurch den Abstand zwischen die Klemmflächen verändert,
- wobei das erste Klemmteil (3) auf der Seite der ansteigenden Führungsfläche (7) mit einem ersten Vorsprung (14) versehen ist,
- wobei das Gleitteil (13) mit einem zweiten Vorsprung (17) versehen ist, der sich auf der gleichen Seite des ersten Klemmteils wie der erste Vorsprung befindet,
- wobei die Vorsprünge manuell aufeinander zu und voneinander weg bewegt werden können, um die Klemmflächen (5, 11) aufeinander zu oder voneinander weg zu bewegen,
- wobei das erste Klemmteil (3) mit einem Schlitz (19) versehen ist, der in der ansteigenden Führungsfläche (7) vorhanden ist und sich in ansteigender Richtung erstreckt,
- wobei das Gleitteil (13) über ein Verbindungsteil (15) mit dem übrigen zweiten Klemmteil (9) verbunden ist, und
- wobei das Verbindungsteil durch den Schlitz ragt und das Gleitteil auf beiden Seiten des Schlitzes (19) angeordnet ist,
**dadurch gekennzeichnet, dass**:
- das erste Klemmteil (3) mit einem weiteren Schlitz (21) versehen ist, der ebenfalls in der ansteigenden Führungsfläche (7) vorhanden und parallel zu diesem Schlitz (19) ist, und
- das zweite Klemmteil (9) mit einem weiteren Gleitteil (23) versehen ist, das über ein weiteres Verbindungsteil (25), das durch den weiteren Schlitz (21) hindurchragt, mit dem Rest des zweiten Klemmteils verbunden ist,
- wobei das weitere Verbindungsteil durch den weiteren Schlitz (21) vorsteht und auch das weitere Gleitteil (23) sich auf beiden Seiten des weiteren Schlitzes (21) befindet und mit einem dritten Vorsprung (27) versehen ist.

2. Klemmvorrichtung nach Anspruch 1, **dadurch gekennzeichnet, dass** die Klemmvorrichtung mit einem Kupplungsteil (29) zum Koppeln mit einem Aufhängungselement (4) versehen ist, wobei das Kupplungsteil zwischen den zwei Schlitzen (19, 21) vorhanden ist.

3. Spannvorrichtung nach Anspruch 1 oder 2, **dadurch gekennzeichnet, dass** die ansteigende Führungsfläche (7) einen ersten Teil (7A) mit einem Neigungswinkel aufweist, der größer ist als der eines zweiten Teils (7B) der ansteigenden Führungsfläche (7B), welcher zweite Teil an den ersten Teil (7) angrenzt.

4. Spannvorrichtung nach Anspruch 3, **dadurch gekennzeichnet, dass** der erste Teil (7A) der ansteigenden Führungsfläche (7) gekrümmt ist und einen abnehmenden Neigungswinkel zum zweiten Teil (7B) hin aufweist und das zweiten Teil (7B) der ansteigende Führungsfläche (7) gerade ist.

5. Spannvorrichtung nach Anspruch 4, **dadurch gekennzeichnet, dass** der Neigungswinkel des ersten Teils (7A) von zwischen 10 bis 15 Grad auf zwischen 6 bis 10 Grad abnimmt und dass der Neigungswinkel des zweiten Teils (7B) zwischen 6 und 10 Grad beträgt.

## Revendications

1. Dispositif de serrage (1) pouvant être appliqué sur un objet (2), par exemple un tissu, une feuille ou une assiette, en serrant deux côtés opposés de l'objet, comprenant :
- une première pièce de serrage (3) pourvue d'une première surface de serrage (5) et d'une surface de guidage (7) présente en regard et montante par rapport à la première surface de serrage, et
- une seconde partie de serrage (9) pourvue d'une seconde surface de serrage (11) qui fait face à la première surface de serrage, ainsi qu'une partie coulissante (13) qui peut coulisser sur la surface de guidage ascendante (7) et modifier ainsi la distance entre les surfaces de serrage,
- dans lequel la première partie de serrage (3) du côté de la surface de guidage ascendante (7) est pourvue d'une première protubérance (14),
- dans lequel la partie coulissante (13) est pourvue d'une deuxième protubérance (17) qui est du même côté de la première partie de serrage que la première protubérance,
- dans lequel les protubérances peuvent être déplacées manuellement l'une vers l'autre et éloignées l'une de l'autre afin de rapprocher ou d'éloigner les surfaces de serrage (5, 11) l'une de l'autre,
- dans lequel la première partie de serrage (3) est pourvue d'une fente (19) qui est présente dans la surface de guidage ascendante (7) et s'étend dans la direction ascendante,
- dans lequel la partie coulissante (13) est reliée via une partie de liaison (15) au reste de la seconde partie de serrage (9), et
- dans lequel la partie de liaison fait saillie à travers la fente et la partie coulissante étant située des deux côtés de la fente (19),
**caractérisé en ce que**:
- la première partie de serrage (3) est pourvue d'une autre fente (21) qui est également présente dans la surface de guidage ascendante (7) et est parallèle à ladite fente (19), et
- la deuxième partie de serrage (9) est pourvue d'une autre partie coulissante (23) qui est reliée par une autre partie de liaison (25) faisant saillie à travers l'autre fente (21) au reste de la deuxième partie de serrage,
- dans lequel l'autre partie de connexion fait saillie à travers l'autre fente (21) et également l'autre partie coulissante (23) est située des deux côtés de l'autre fente (21) et est pourvue d'une troisième saillie (27).

2. Dispositif de serrage selon la revendication 1, **caractérisé en ce que** le dispositif de serrage est pourvu d'une pièce de couplage (29) pour le couplage à un élément de suspension (4), laquelle pièce de couplage est présente entre les deux fentes (19, 21).

3. Dispositif de serrage selon la revendication 1 ou 2, **caractérisé en ce que** la surface de guidage ascendante (7) comporte une première partie (7A) d'angle d'inclinaison supérieur à celui d'une deuxième partie (7B) de la surface de guidage ascendante (7B ), laquelle seconde partie est adjacente à la première partie (7).

4. Dispositif de serrage selon la revendication 3, **caractérisé en ce que** la première partie (7A) de la surface de guidage ascendante (7) est incurvée et présente un angle d'inclinaison décroissant vers la deuxième partie (7B) et la deuxième partie (7B) de la surface de guidage ascendante (7) est rectiligne.

5. Dispositif de serrage selon la revendication 4, **caractérisé en ce que** l'angle d'inclinaison de la première partie (7A) diminue de 10 à 15 degrés à 6 à 10 degrés et que l'angle d'inclinaison de la deuxième partie (7B) est entre 6 et 10 degrés.
